# EUROPEAN PATENT APPLICATION

(11) **EP 4 685 511 A2**
(43) Date of publication of application: **28.01.2026**
(21) Application number: 25184820.6
(22) Date of filing: 24.06.2025
(51) Int. Cl.: G01S 5/02, H04W 64/00

(54) **POSITIONING UTILIZING ARTIFICIAL INTELLIGENCE (AI)/MACHINE LEARNING (ML) MODEL**

(30) Priority: 28.06.2024 US 202463665416 P; 29.05.2025 US 202519222740
(71) Applicant: Samsung Electronics Co., Ltd., Suwon-si, Gyeonggi-do 16677 (KR)
(72) Inventor: ZHOU, Yuhan, San Jose, CA 95134 (US); CHENG, Yuan-Sheng, San Jose, CA 95134 (US); SARTORI, Philippe Jean Marc Michel, San Jose, CA 95134 (US)
(74) Representative: Kuhnen & Wacker Patent- und Rechtsanwaltsbüro PartG mbB

(57) **Abstract**

A method for positioning is disclosed. The method may include receiving (905), by a user equipment, UE, a threshold configured by a location server, determining (910), by the UE, a criterion associated with the threshold, activating (915), by the UE, a positioning model for positioning according to the criterion, monitoring (920), by the UE, a performance of the positioning model, and reporting (925), to the location server by the UE, the performance of the positioning model. The method may further be implemented at a network node (e.g., a base station), which improves the efficiency of positioning.

## Description

### BACKGROUND

### 1. FIELD

Aspects of some embodiments relate to wireless communications. For example, aspects of some embodiments of the present disclosure relate to improvements to positioning utilizing artificial intelligence (AI)/machine learning (ML) model.

### 2. DESCRIPTION OF THE RELATED ART

There are several approaches in New Radio (NR) for positioning, such as timing-based positioning and angle-based positioning. However, the timing-based positioning may increase resource overhead because the estimation uses both downlink resource signal and uplink resource signal, and the angle-based positioning may require a large number of antenna elements to achieve high resolution. An AI/ML model may be introduced for positioning, however, there is no support or corresponding signaling to enable the AI/ML model for positioning in the latest release.

The above information disclosed in this Background section is only for enhancement of understanding of the background and therefore the information discussed in this Background section does not necessarily constitute prior art.

### SUMMARY

Aspects of the present disclosure provide a method for positioning performed at one side, e.g., a user equipment (UE) side, a network node (e.g., a base station) side, and a location server side, that improves the accuracy of positioning and reduces or minimizes resource utilization for positioning.

Aspects of the present disclosure also provide a UE for positioning that improves the accuracy of positioning and reduces resource utilization for positioning.

Aspects of the present disclosure also provide a system for positioning that improves the accuracy of positioning and reduces resource utilization for positioning.

Additional aspects will be set forth in part in the description which follows and, in part, will be apparent from the description, or may be learned by practice of the presented embodiments of the disclosure.

According to one or more embodiments of the present disclosure, a method may include receiving, by a UE, a threshold configured by a location server, determining, by the UE, a criterion associated with the threshold, activating, by the UE, a positioning model for positioning according to the criterion, monitoring, by the UE, a performance of the positioning model, and reporting, to the location server by the UE, the performance of the positioning model.

In one or more embodiments, the determining of the criterion may further include determining, by the UE, that a probability of line of sight (LOS) is lower than or equal to threshold.

In one or more embodiments, the method may further include receiving, from the location server, the positioning model selected by the location server.

In one or more embodiments, the method may further include sending, to the location server by the UE, a report indicating a capability of supporting the positioning model, and receiving, from the location server by the UE, a configuration for employing the positioning model.

In one or more embodiments, the method may further include determining, by the UE, that the probability of LOS is greater than the threshold, selecting, by the UE, a second positioning model for positioning, and sending, to the location server by the UE, an indicator indicating whether the positioning model is feasible and/or whether there is a change in the positioning model.

In one or more embodiments, the positioning model may be trained at the UE utilizing ground-truth labels, wherein the ground-truth labels are sent from at least one selected from among a Positioning Reference Unit (PRU), a UE, and a location server, through at least one selected from among Sidelink Positioning Protocol (SLPP), cellular V2X (PC5) communication, and LTE positioning protocol (LPP).

In one or more embodiments, the performance may include a measurement including timing and power information associated with a channel response and a time stamp and quality information associated with the measurement.

According to some embodiments of the present disclosure, a method may include receiving, by a network node, a threshold configured by a location server, determining, by the network node, a criterion associated with the threshold, activating, by the network node, a positioning model for positioning according to the criterion, monitoring, by the network node, a performance of the positioning model, and reporting, to the location server by the network node, the performance of the positioning model.

In one or more embodiments, the determining of the criterion may further include determining, by the network node, that a probability of line of sight (LOS) is lower than or equal to threshold.

In one or more embodiments, the method may further include selecting, by the network node, a second positioning model for positioning, and sending, to the location server by the network node, an indicator indicating whether the positioning model is feasible and/or whether there is a change in the positioning model.

In one or more embodiments, the performance may include a measurement report including the timing and power information associated with a channel response, a time stamp and the quality information associated with the measurement.

In one or more embodiments, the method may further include receiving, by the network node, a non-line-of-sight (NLOS) indicator with a measurement associated with at least one selected from among reference signal time difference (RSTD), Rx-Tx time difference, reference signal received power (RSRP), reference signal received path power (RSRPP), Angle of Arrival (AoA), Relative Time of Arrival (RTOA), reference signal carrier phase (RSCP), and reference signal carrier phase difference (RSCPD).

In one or more embodiments, the method may further include sending, to the location server by the network node, a request for data associated with a selection of the positioning model through New Radio Positioning Protocol A (NRPPa); and receiving, from the location server by the network node, an identifier (ID) corresponding to the data associated with the selection of the positioning model through NRPPa.

According to some embodiments of the present disclosure, a method may include sending, by a location server, a request for data associated with a selection of a positioning model, receiving, by the location server, a measurement associated with the selection of the positioning model, and selecting, by the location server, the positioning model based on the measurement.

In one or more embodiments, the request may be included in information element (IE) *RequestLocationInformation* utilizing LPP.

In one or more embodiments, the measurement may be received from a UE through LPP.

In one or more embodiments, the measurement may be received from a network node through NRPPa.

In one or more embodiments, the positioning model may be trained at the location server utilizing ground-truth labels, where the ground-truth labels are sent from at least one selected from among a Positioning Reference Unit (PRU) and a UE, through at least one selected from among SLPP, cellular V2X (PC5) communication, and LPP. For example, a PRU may provide a set of sounding reference signals (SRSs) to be used as the ground-truth labels.

In one or more embodiments, the method may further include receiving, from a UE by the location server, a report indicating a capability of supporting the positioning model; and sending, to the UE by the location server, a configuration for employing the positioning model through an information element, e.g., IE *RequestLocationInformation.*

In one or more embodiments, the performance may include a measurement report including the timing and power information associated with a channel response, a time stamp and the quality information associated with the measurement.

According to some embodiments of the present disclosure, a UE may include a processing circuit, the processing circuit being configured to perform receiving a threshold configured by a location server, determining a criterion associated with the threshold, activating a positioning model for positioning according to the criterion, monitoring, by the UE, a performance of the positioning model, and reporting, to the location server by the UE, the performance of the positioning model.

In one or more embodiments, the processing circuit may be configured to further perform sending, to the location server, a report indicating a capability of supporting the positioning model, and receiving, from the location server, a configuration for employing the positioning model.
or more embodiments, the processing circuit may be configured to further perform determining that a probability of LOS is greater than the threshold, selecting a second positioning model for positioning, and sending, to the location server, an indicator indicating whether the positioning model is feasible and/or whether there is a change in the positioning model.

According to some embodiments of the present disclosure, a system may include a UE, one or more network nodes, and a location server. The UE may be configured to: receive, from the location server, a threshold configured by the location server; determine a criterion associated with the threshold, activate a positioning model for positioning according to the criterion, monitor a performance of the positioning model, and report, to the location server, the performance of the positioning model.

In one or more embodiments, the UE may be further configured to receive, from the one or more network nodes, data associated with a number of network nodes for positioning, send, to the location server, a report indicating a capability of supporting the positioning model based on the data, and receiving, from the location server, a configuration for employing the positioning model.

### BRIEF DESCRIPTION OF THE DRAWINGS

The above and other aspects of the present disclosure will be more clearly understood from the following detailed description of the illustrative, non-limiting embodiments with reference to the accompanying drawings.
FIG. 1A and FIG. 1B are diagrams each depicting an example timing-based NR positioning.
FIG. 2A and FIG. 2B are diagrams each depicting an example angle-based NR positioning.
FIG. 3A and FIG. 3B are diagrams each depicting an example AI/ML positioning.
FIG. 4 is a diagram depicting an example life cycle management of an AI/ML model.
FIG. 5 is a flowchart depicting an example method for triggering an AI/ML direct positioning by LOS/NLOS conditions, according to some embodiments of the present disclosure.
FIG. 6 is a flowchart depicting an example method for selecting an AI/ML positioning model performed at a location server, according to some embodiments of the present disclosure.
FIG. 7 is a flowchart depicting an example method for selecting an AI/ML positioning model performed at a base station, according to some embodiments of the present disclosure.
FIG. 8 is a flowchart depicting an example method for determining whether measurement data and ground-truth label are linked, according to some embodiments of the present disclosure.
FIG. 9 is a flowchart depicting an example method for positioning performed at a user equipment (UE), according to some embodiments of the present disclosure.
FIG. 10 is a flowchart depicting an example method for positioning performed at a network node, according to some embodiments of the present disclosure.
FIG. 11 is a flowchart depicting an example method for positioning performed at a location server, according to some embodiments of the present disclosure.
FIG. 12 is a block diagram of an electronic device in a network environment, according to some embodiments of the present disclosure.
FIG. 13 shows a system including a UE and a gNB in communication with each other, according to some embodiments of present disclosure.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding nonhyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the example embodiments of the present disclosure.

Positioning is an important use case for NR, and a significant effort has been studied in 3GPP to define accurate measurement and protocols for positioning. In the present disclosure, "legacy" methods may refer to methods before or up to Release 18, unless the context clearly indicates otherwise, for example, for carrier-phase positioning which may substantially reach its limits in terms of accuracy. To further improve positioning, the application of AI/ML model for positioning is being standardized in Release 19.

The application of AI/ML model for positioning requires changes in the signaling and in the UE operations. Aspects of the present disclosure are directed towards signaling for triggering the AI/ML model signaling messages to support the AI/ML model, including triggers for AI/ML positioning, UE capabilities for AI/ML positioning, model identifications for AI/ML positioning, model inference for AI/ML positioning, and model monitoring for AI/ML positioning. The AI/ML positioning may include AI/ML direct positioning and AI/ML assisted positioning.

Aspects of the present disclosure provide solutions to the AI/ML positioning with one side model (e.g., implementing the AI/ML positioning at one entity in the network, such as a UE, a network node, a base station, or a location server).

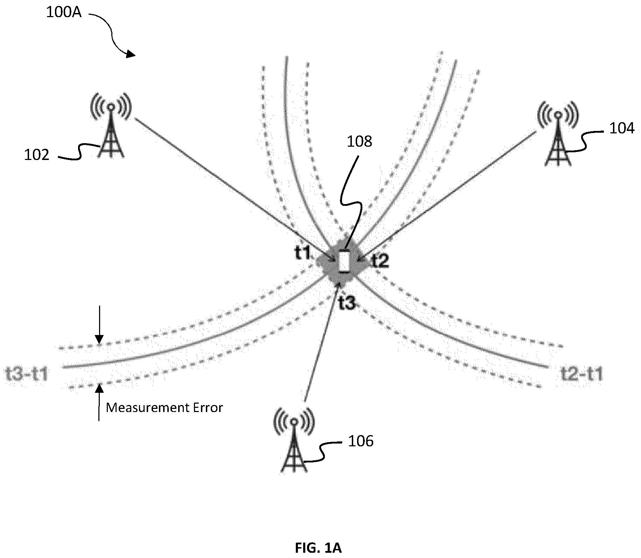

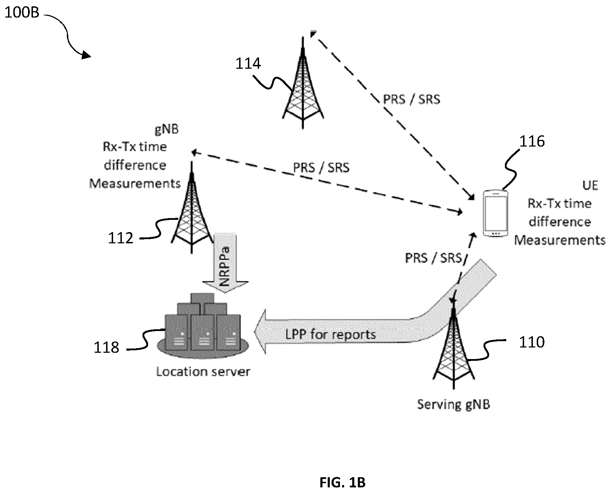

FIG. 1A and FIG. 1B are diagrams each depicting an example timing-based NR positioning.

Approaches for positioning in NR may include Downlink Time Difference of Arrival (DL-TDOA), Uplink Time Difference of Arrival (UL-TDOA), Multi-Cell Round Trip Time (Multi-RTT), Downlink Angle of Departure (DL-AoD), Uplink Angle of Arrival (UL-AoA), and Enhanced Cell ID (E-CID).

Referring to FIG. 1A, a system 100A for positioning utilizing DL-TDOA is shown. The system 100A may include a first base station 102, a second base station 104, a third base station 106, and a user equipment (UE) 108. In one or more embodiments, the first base station 102, the second base station 104, and the third base station 106 may be a gNB. Although FIG. 1A illustrates various components in a system for positioning utilizing DL-TDOA, embodiments according to the present disclosure are not limited thereto, and according to various embodiments, the system may include additional components or fewer components without departing from the spirit and scope of embodiments according to the present disclosure.

The UE 108 measures the reference signal time difference (RSTD) utilizing a positioning reference signal (PRS) from different cells and reports the RSTD to a location server. To calculate the location of the UE 108, the network needs to know accurately the locations of the base stations (e.g., the first base station 102, the second base station 104, and the third base station 106), for example, including the location of transmit antennas and/or the transmission timing of each cell provided by its corresponding base station.

For example, the UE 108 while connected to a base station (e.g., at least one of the first base station 102, the second base station 104, or the third base station 106) may require measurement gaps to perform inter-frequency measurements from Evolved Universal Terrestrial Radio Access (E-UTRA) transmission point (TP). To measure the RSTD between a NR serving cell and an LTE Observed Time Difference of Arrival (OTDOA) assistance data reference neighbor cell, the UE 108 needs to know the system frame number (SFN) and subframe timing difference of these cells. The UE 108 may obtain SFN of the NR serving cell through decoding physical broadcast channel (PBCH). If the UE 108 is not aware of the SFN of at least one LTE cell in the OTDOA assistance data, the UE 108 may use autonomous gaps to acquire SFN of the E-UTRA OTDOA reference neighbor cell prior to requesting measurement gaps for performing the requested E-UTRA RSTD measurements. If the UE 108 is not aware of and cannot derive the subframe timing difference between the NR serving cell and the LTE OTDOA assistance data reference neighbor cell, the UE 108 may need to request the measurement gaps to perform cell detection for the OTDOA assistance data reference neighbor cell prior to requesting measurement gaps for performing the requested E-UTRA RSTD measurements.

As shown in FIG. 1A, the UE 108 measures three RSTDs, including t1, t2, and t3, between the UE 108 and the first base station 102, the second base station 104, and the third base station 106, and reports the measured RSTDs to a location server (e.g., a network entity implementing Location Management Function (LMF), hereinafter "LMF"). For example, assuming that the first base station 102 is the serving cell (e.g., the serving Transmission Reception Point (TRP)) for the UE 108, and the measurement from the first base station 102 is selected as reference, two RSTDs corresponding to the second base station 104 and the third base station 106 (e.g., the reference TRPs) are calculated at the UE 108 and reported to the first base station 102 as RSTD_{2,1} = t2 - t1 and RSTD_{3,1} = t3 - t1.

Another timing-based positioning method is called UL-TDOA, in which the UE 108 sends a sounding reference signal (SRS), which is received at multiple locations. Two or more coordinated gNBs (e.g., the first base station 102, the second base station 104, and/or the third base station 106) measure the relative time of arrival (RTOA) and report the results to the location server (e.g., the LMF). The location server then utilizes the RTOA measurements with the known locations of the gNBs to estimate a position of the UE 108.

Referring FIG. 1B, a system 100B for positioning utilizing multi-RTT is shown. The system 100B may include a first base station 110, a second base station 112, a third base station 114, a UE 116, and a location server 118. In one or more embodiments, the first base station 110, the second base station 112, and the third base station 114 may be a gNB. Although FIG. 1B illustrates various components in a system for positioning utilizing multi-RTT, embodiments according to the present disclosure are not limited thereto, and according to various embodiments, the system may include additional components or fewer components without departing from the spirit and scope of embodiments according to the present disclosure.

According to some embodiments, the first base station 110 may be a serving gNB connecting to the UE 116. The multi-cell RTT positioning method is utilized to estimate the RTT between a UE (e.g., the UE 116) and multiple gNBs (e.g., the first base station 110, the second base station 112, and the third base station 114) by transmitting and receiving signals between the necessary devices. The distances between the UE 116 and the first base station 110, the second base station 112, and the third base station 114 are then estimated utilizing the RTT. Similar to other timing-based techniques (e.g., DL-TDOA), a trilateration estimation algorithm may be utilized to estimate the position of the UE 116. In DL-TDOA and UL-TDOA, one source of timing estimation error may come from the synchronization errors between the first base station 110, the second base station 112, and the third base station 114. One advantage of utilizing the RTT to estimate the distance between a UE (e.g., the UE 116) and a gNB (e.g., one of the first base station 110, the second base station 112, and the third base station 114) is that these synchronization errors may no longer be a factor or a significant factor. However, the multi-cell RTT positioning method may increase resource overhead due to the utilization of both DL RS and UL RS.

As shown in FIG. 1B, both the UE 116 and the first base station 110 (e.g., the serving TRP) measure the Rx-Tx time difference and report it to the location server 118 (e.g., the LMF).

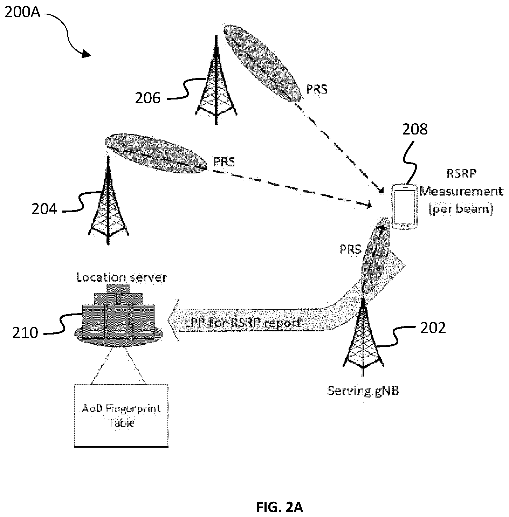

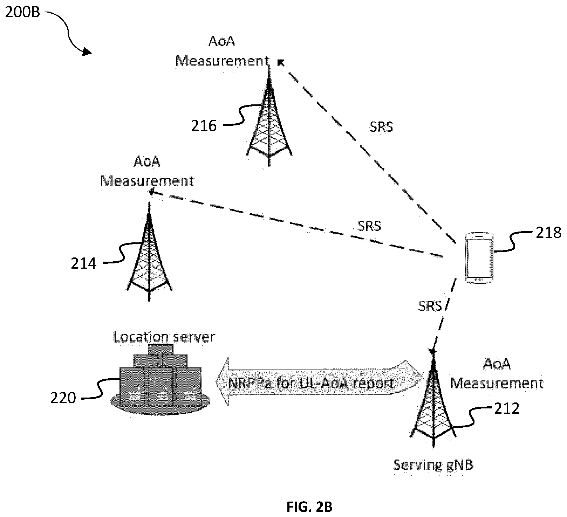

FIG. 2A and FIG. 2B are diagrams each depicting an example angle-based NR positioning.

Referring to FIG. 2A, a system 200A for positioning utilizing DL-AoD is shown. The system 200A may include a first base station 202, a second base station 204, a third base station 206, a UE 208, and a location server 210. In one or more embodiments, the first base station 202, the second base station 204, and the third base station 206 may be a gNB. Although FIG. 2A illustrates various components in a system for positioning utilizing DL-AoD, embodiments according to the present disclosure are not limited thereto, and according to various embodiments, the system may include additional components or fewer components without departing from the spirit and scope of embodiments according to the present disclosure.

According to some embodiments, the first base station 202 may be a serving gNB connecting to the UE 208. The UE 208 measures the DL Positioning Reference Signal (PRS) and Reference Signal Received Power (RSRP) per Tx beam, estimates the angle of departure (AoD) of the transmitted beam based on the direction of the signal, and reports it to the location server 210 (e.g., the LMF).

In the DL-AoD positioning method, the position of the UE 208 is estimated based on DL-PRS-RSRP measurements taken at the UE 208 of downlink radio signals from multiple NR TRPs (e.g., the first base station 202, the second base station 204, and the third base station 206), with the geographical coordinates of the TRPs and their relative downlink timing. Once the RSRP has been reported from the UE 208, there are multiple methods to estimate the AoD. For example, the location server 210 may utilize a AoD fingerprint table to process the measurement report (e.g., including RSRP) from the UE 208, e.g., a fingerprinting-like estimation to determine the AoD based on RSRP reports across multiple beams received from the same gNB (e.g., the first base station 202) at the UE 208.

The UE 208 may also utilize existing Rel-15 reference signals for the RSRP measurements, such as Channel State Information Reference Signal (CSI-RS). Another option for the UE 208 is to utilize the NR PRS for the RSRP measurements. In one or more embodiments, a hybrid method between DL-TDOA and DL-AoD may be possible utilizing the same transmissions of PRS.

Referring to FIG. 2B, a system 200B for positioning utilizing UL-AoA is shown. The system 200B may include a first base station 212, a second base station 214, a third base station 216, a UE 218, and a location server 220. In one or more embodiments, the first base station 212, the second base station 214, and the third base station 216 may be a gNB. Although FIG. 2B illustrates various components in a system for positioning utilizing UL-AoA, embodiments according to the present disclosure are not limited thereto, and according to various embodiments, the system may include additional components or fewer components without departing from the spirit and scope of embodiments according to the present disclosure.

For example, the first base station 212 may be a serving gNB connecting to the UE 218. The serving gNB (e.g., the first base station 212) measures the UL Sounding Reference Signal (SRS), estimates the angle of arrival (AoA) from the UE 218 to the serving gNB, and reports it to the location server 220 (e.g., the LMF).

However, for both DL-AoD and UL-AoA, the non-line of sight (NLOS) conditions may affect the results of positioning. In addition, the NLOS conditions may also be an error source in timing-based positioning methods (e.g., DT-TDOA and multi-RTT).

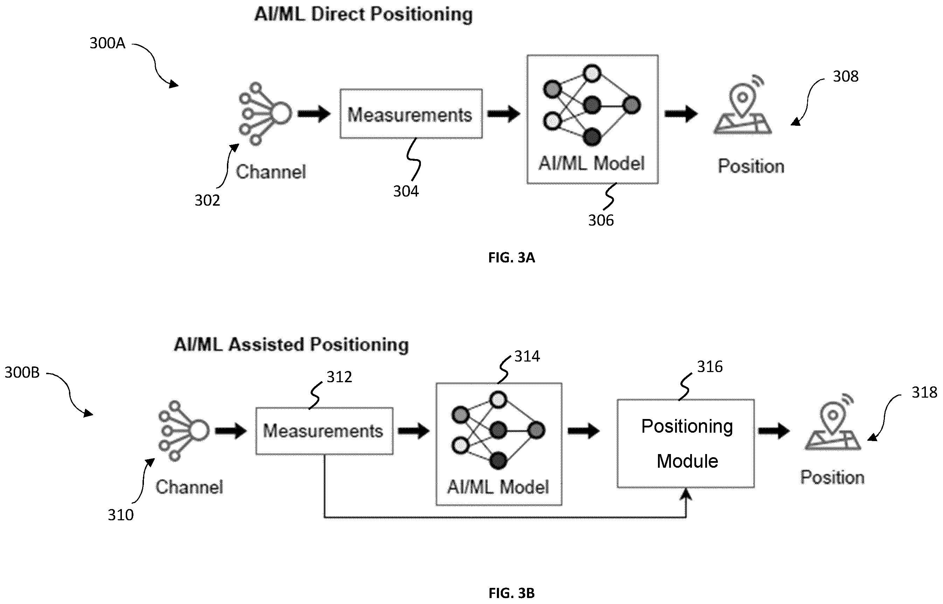

FIG. 3A and FIG. 3B are diagrams each depicting an example AI/ML positioning.

Referring to FIG. 3A, an AI/ML direct positioning method 300A is shown. The direct AI/ML positioning method 300A may include a machine learning model that directly outputs the location of a UE (e.g., coordinates of a location of the UE). The AI/ML direct positioning method 300A may include receiving channel observations 302, computing channel measurements based on the channel observations for each channel 304, sending the channel measurements to an AI/ML model as an input for positioning 306, and outputting, by the AI/ML model, a position of a UE 308. For example, the direct AI/ML positioning method 300A may utilize fingerprinting, which employs the channel observations as an input for the machine learning model to estimate the location of the UE. In one or more embodiments, the channel observations may include channel impulse response and/or power delay profile.

In one or more embodiments, the output of the AI/ML model may be an output that is a new measurement and/or an enhancement of existing measurements, e.g., LOS/NLOS identification, timing and/or angle of measurement, and/or the like.

Referring to FIG. 3B, an AI/ML-assisted positioning method 300B is shown. The AI/ML-assisted positioning method 300B may include a machine learning model that outputs internal parameters/measurements to refine measurements output by other positioning methods (e.g., timing-based positioning and angle-based positioning) for estimating the location of the UE. The AI/ML-assisted positioning method 300B may include receiving channel observations 310, computing channel measurements based on the channel observations for each channel 312, sending the channel measurements to an Al/ML model as an input for positioning 314, sending the output of the AI/ML model to a positioning module as an input for positioning 316, and outputting a position of a UE 318.

For example, the machine learning model may provide additional/refined measurement for improving the results of other positioning methods, e.g., identifying Line-of-Sight (LOS) versus Non-Line-of-Sight (NLOS) conditions and/or providing insights into the timing or angle of measurements and/or measurements related to the timing or angle.

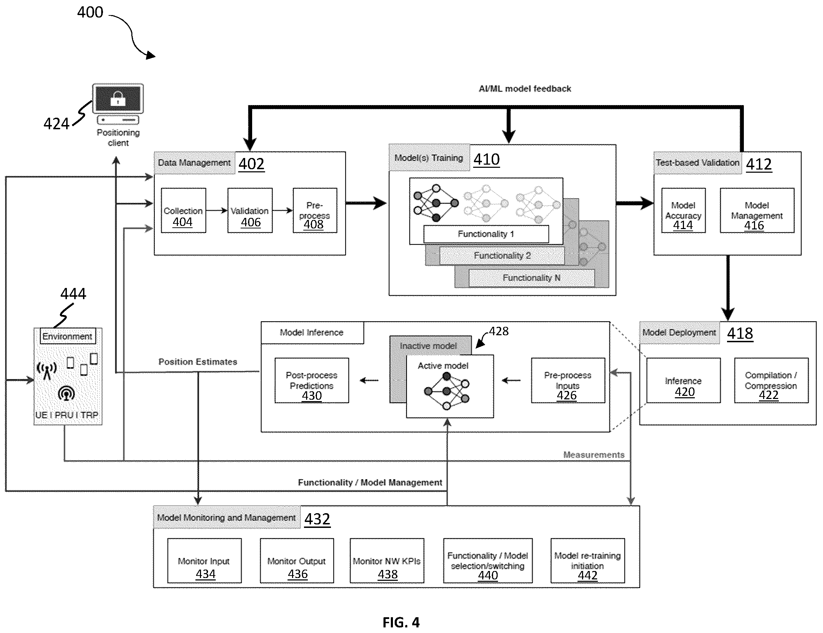

FIG. 4 is a diagram depicting an example life cycle management of an AI/ML model.

Referring to FIG. 4, a life cycle management of an AI/ML model 400 may include a data management module 402 for data management, a model training module 410 for model training, a model validation module 412 for model validation, a model deployment module 418 for model deployment, a model monitoring and management module 432 for model monitoring and management, and/or the like. In the data management module 402, input data for the model training is provided. For example, the data management may include collecting the input data 404, validating the input data 406, and pre-processing the input data for the model training 408.

In the model training module 410, a dataset may include data from a single environment and/or one or more environments of all the available environments. The AI/ML model 400 may be trained in response to a corresponding functionality, for example, a functionality of positioning.

In the model validation module 412 (e.g., a test-based validation), the model validation may include validating model accuracy 414. For example, the trained model accuracy is evaluated internally utilizing a dedicated test set, or the trained model accuracy may be evaluated by a RAN4 test. Furthermore, the model validation may include model management 416, e.g., model selection/switching/(de)activation, and/or the like.

In one or more embodiments, the AI/ML model 400 may collect data (e.g., AI/ML model feedback) as an input for the data management module 402, the model training module 410, and the model validation module 412.

In the model deployment module 418, the model deployment may be to deploy the trained and validated model in a hardware device for inference. For example, a model deployment module 418 may include an inference module 420 for inference and a compression module 422 for reducing the size of the trained model. Furthermore, the inference module 420 may then provide outputs of the AI/ML models to a positioning client 424 (e.g., a UE and/or a gNB).

In one or more embodiments, the inference module 420 may perform pre-processing inputs (e.g., data pre-processing, cleaning, formatting, and/or transformation for collected data) 426, activating/inactivating AI/ML model based on the inputs 428, and post-processing predictions for outputs of the AI/ML model 430.

The deployed model may be monitored by the model monitoring and management module 432. The model monitoring and management module 432 may be to monitor input 434, output 436, network Key Performance Indicators (KPIs) 438, functionality/model selection and/or switching 440, and/or model re-training initiation 442. For example, the model input/output and network-side requirements are monitored, and a model activation/de-activation and/or a model selection/switching (e.g., a change in the AI/ML positioning model) may also monitored. In addition, a model re-training initiation may be monitored to update the trained model to improve the accuracy of outputs (e.g., the results of positioning).

In one or more embodiments, one or more network entities (e.g., a UE, a PRU, and/or a TRP) in an environment 444 may provide measurements as an input to the AI/ML model 400. For example, the entities in the environment 444 may send measurements to the data management module 402 and the model monitoring and management module 432 as inputs.

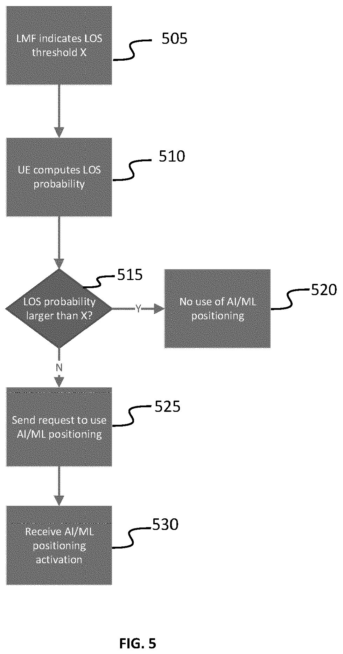

FIG. 5 is a flowchart depicting an example method for triggering an AI/ML direct positioning by LOS/NLOS conditions, according to some embodiments of the present disclosure. Although FIG. 5 illustrates various operations in a method for triggering an AI/ML direct positioning by LOS/NLOS conditions, embodiments according to the present disclosure are not limited thereto, and according to various embodiments, the method may include additional operations, or fewer operations, or the order of operations may vary, unless otherwise stated or implied, without departing from the spirit and scope of embodiments according to the present disclosure.

Referring to FIG. 5, a method for triggering the AI/ML positioning model at one entity in the network is shown. For example, the AI/ML positioning model may be implemented at the UE and may be activated based on LOS/NLOS conditions to reduce or eliminate unnecessary utilization of bandwidth. In the example method shown in FIG. 5, the LMF may configure or determine, at operation 505, a threshold corresponding to, for example, the LOS/NLOS conditions. The LMF may further indicate the set threshold to the entity implementing the AI/ML positioning model (e.g., the UE). The UE may compute, at operation 510, a probability of LOS and determine, at operation 515, whether the probability of LOS is greater than the set threshold. If the probability of LOS is greater than the set threshold, the UE will not activate, at operation 520, the AI/ML positioning model. If the probability of LOS is lower than or equal to the set threshold, the UE will send, at operation 525, a request to the LMF for using the AI/ML positioning model, and receive, at operation 530, an activation for the AI/ML positioning model. For example, the UE may send a request to the LMF requesting an activation of the AI/ML positioning model, and then receive the activation of the AI/ML positioning model from the LMF.

Such a method provides triggers to enable the utilization/activation of the AI/ML positioning model, and the triggers may include AI/ML positioning model applicable conditions and/or environment(channel) applicable conditions. For example, the probability of LOS may be a trigger. If the UE is in LOS conditions (e.g., having a direct path between a receiver and a transmitter), measurements related to positioning will likely be accurate. However, if the UE experiences a significant reflection and is in NLOS conditions (e.g., having an obstacle in the direct path between the receiver and the transmitter), the positioning measurement will likely be inaccurate. Therefore, utilizing the LOS/NLOS conditions as a trigger for switching between the AI/ML positioning model and legacy positioning may be advantageous and useful. The entity implementing the method for triggering the AI/ML positioning model may be a UE, a network node (e.g., a base station, such as a gNB), and/or a location server (e.g., the LMF).

The use cases for triggering the AI/ML positioning model according to some embodiments are listed as follows:
(1) In Case 1: According to an example of UE-based positioning with a UE-side model, a UE activates the AI/ML positioning model if (e.g., when) the UE detects the probability of LOS is lower than or equal to a set threshold, where the value of the set threshold is configured by the LMF.
(2) In Case 2a: According to an example of UE-assisted positioning with the UE-side model, if (e.g., when) the UE detects the probability of LOS is lower than or equal to a set threshold X, where the value of the set threshold is configured by the LMF, UE sends a request to the LMF through LTE positioning protocol (LPP) for activating the AI/ML positioning model. If (e.g., when) the LMF receives the request from UE, the LMF actives the AI/ML positioning model by sending an activation signal to UE through LPP.
(3) In Case 2b: According to an example of UE-assisted positioning with a LMF-side model, the UE activates the AI/ML positioning model through LPP signalling from UE to the LMF if (e.g., when) the UE detects the probability of LOS is lower than or equal to a set threshold, where the value of the set threshold is configured by the LMF.
(4) In Case 3a: According to an example of positioning with gNB-side model, a gNB activates the AI/ML positioning model, if (e.g., when) the gNB detects a probability of LOS is lower than or equal to a set threshold, where the value of the set threshold is configured by the LMF.
(5) In Case 3b: According to an example of gNB-assisted positioning with LMF-side model, gNB activates the AI/ML positioning model through LPP signalling from gNB to the LMF, if (e.g., when) gNB detects the probability of LOS is lower than or equal to a set threshold, where the value of threshold is configured by the LMF.

Referring to FIG. 5, Case 2a is shown. The triggering is determined for each measurement based on the LOS/NLOS conditions from the entity sending the positioning signal. Therefore, the UE is first configured with a threshold X (e.g., the set threshold configured by the LMF). If the probability of LOS is lower than or equal to X, the UE uses the AI/ML direct positioning, otherwise the UE uses legacy positioning (e.g., if the probability of LOS is greater than X). This value X may be a UE-specific value and configured by dedicated RRC signaling. Similarly, this value X may be a cell-specific value and communicated from a System Information Block (SIB). In addition, the value X may also be pre-configured according to some embodiments. In some embodiments, a trigger may be a condition that a number of received positioning signals are above a threshold (e.g., a number of the received positioning signal is greater than a value of the threshold). A trigger may be based on other indicators (e.g., a NLOS indicator) other than a probability of LOS. For example, any conditions/features in the power delay profile (PDP) may be utilized as a trigger. In this embodiment, the criterion for being the trigger may depend on the delay of one or more suitable received rays, a relative power of the signal compared to the power of the top ray, and/or the like.

Once the UE has received the threshold (e.g., from the LMF), the UE computes the probability of LOS. This computation of the probability of LOS may be performed in the background and may not necessarily be transmitted to the LMF. If the probability of LOS is greater than X, the UE uses legacy positioning. If the UE measures a probability of LOS being lower than or equal to X, the UE then notifies the LMF by sending e.g., an RRC message, that the probability of LOS is lower than or equal to X. The LMF, based on this trigger, may then send a command to activate the AI/ML direct positioning for positioning.

In some embodiments, in legacy systems, it is possible to have the UE to determine the probability of LOS. However, the UE may perform this computation (e.g., computing the probability of LOS) if (e.g., when) probed by the LMF, and then automatically send the probability of LOS to the LMF. In some embodiments, the UE may be requested to perform the computation of the probability of LOS. In this example, the UE will not report the computed value (e.g., the probability of LOS) until the computed value is greater than the set threshold. It is advantageous to reduce or limit unnecessary signaling overhead.

In some embodiments, in Case 1, Case 2b, and Case 3b, there are other conditions (e.g., a trigger or a trigger event) to trigger the AI/ML direct positioning. For example, the LMF may directly configure the UE to employ the AI/ML direct positioning through an information element, e.g., IE *RequestLocationinformation,* after the UE reports the capability of supporting the AI/ML direct positioning.

For the AI/ML assisted positioning (e.g., the models applied to Case 2a and Case 3a), it may be utilized together with other positioning methods (e.g., a timing-based positioning and angle-based positioning). Therefore, a NLOS indicator provided by the AI/ML assisted positioning may be reported together with one or more of other measurements including reference signal time difference (RSTD), Rx-Tx time difference, reference signal received power (RSRP), reference signal received path power (RSRPP), Angle of Arrival (AoA), Relative Time of Arrival (RTOA), reference signal carrier phase (RSCP), and/or reference signal carrier phase difference (RSCPD).

Regarding the capability of supporting the AI/ML direct positioning, a declaration of the capability of UE supporting the AI/ML direct positioning is essential for its corresponding model inference and/or life cycle management (LCM) operations, because most of the AI/ML models (e.g., the models applied to the AI/ML direct positioning and the AI/ML assisted positioning) may be trained offline, and the standards will not specify the detailed structure of AI/ML models. Therefore, the UE and/or the gNB may determine how to train the AI/ML models during offline based on certain functionalities and/or configurations (e.g., the configurations of the UE and/or the gNB).

For the AI/ML assisted positioning, the UE may need to provide/report a capability indicating whether the measurement report including timing and angle information is supported, and/or a capability indicating whether other information (e.g., a scenario identifier, a LOS/NLOS condition, a timing error, and/or the like) is supported.

To determine UE capabilities for Case 1, a dimension of the AI/ML model input may be the capability of supporting the AI/ML model of the UE. For example, the dimension may be the number of TRPs, N times the maximum number of measurements reported by each TRP, M. The UE may report a vector of (M, N) as its capability.

In Case 1 (e.g., the UE-based positioning with UE-side model in the AI/ML direct positioning), a UE capability is declared as a vector of (M, N), where N is the number of TRPs for positioning, and M is the maximum dimension of the model input for each TRP. If (e.g., when) the number of TRPs is the same as the maximum dimension of the model input, the UE may further declare its capability as the vector of the dimension of the model input, e.g., M₁, M₂, M₃, ... M_{N}, where Mᵢ is the dimension of the model input provided by i-th TRP. In this case, the UE may further declare its capability based on the dimension of the model input of each measurement type, including Time of Arrival (ToA), RSTD, RSRP, RSRPP, Channel Impulse Response (CIR), and/or PDP, e.g., M_{ToA}, M_{RSTD}, M_{RSRP}, M_{RSRPP}, M_{CIR}, and/or M_{PDP}, where M_{X} is the dimension of the model input corresponding to the measurement type of X.

To determine UE capabilities for Case 2a (e.g., the UE-assisted positioning/LMF-based positioning with the UE-side model in the AI/ML assisted positioning), the UE may report if the UE supports providing corresponding measurements for the AI/ML assisted positioning. In some embodiments, supporting different measurement types and the maximum dimension for each measurement type (e.g., ToA, RSTD, RSRP, RSRPP, CIR, and/or PDP) in a report may be an optional UE capability.

In Case 2a, the dimension of the model input may be referred to as the UE capability. For example, the dimension of the model input may be the number of TRPs, N times the dimension of the reported measurement by each TRP, M. The UE may report a vector of (M, N) as its capability, where N is the number of TRPs for positioning, and M is the maximum dimension of the model input for each TRP. If (e.g., when) the number of TRPs is the same as the maximum dimension of the model input, the UE may further declare its capability as the vector of the dimension of the model input, e.g., M₁, M₂, M₃, ... M_{N}, where Mᵢ is the dimension of the model input provided by i-th TRP. In this case, the UE may further declare its capability based on the dimension of the model input of each measurement type of ToA, RSTD, RSRP, RSRPP, CIR, and/or PDP, e.g., M_{ToA}, M_{RSTD}, M_{RSRP}, M_{RSRPP}, M_{CIR}, and/or M_{PDP}, where M_{X} is the dimension of the model input corresponding to the measurement type of X.

To determine UE capabilities for Case 2b (e.g., the UE-assisted positioning/LMF-based positioning with the LMF-side model in the AI/ML direct positioning), the UE may report if the UE supports providing corresponding measurements for the AI/ML direct positioning. In some embodiments, supporting different measurement types and maximum dimensions for each measurement type (i.e., ToA, RSTD, RSRP, RSRPP, CIR, and/or PDP) in a report may be an optional UE capability.

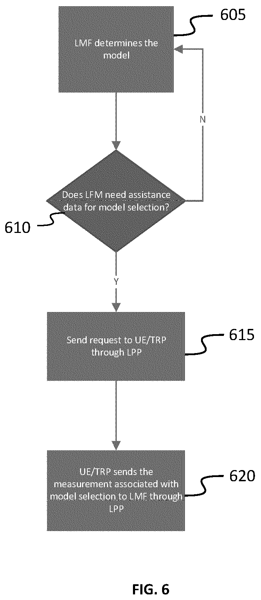

FIG. 6 is a flowchart depicting an example method for selecting an AI/ML positioning model performed at a location server (e.g., an entity implementing LMF), according to some embodiments of the present disclosure. Although FIG. 6 illustrates various operations in a method for selecting an AI/ML positioning model performed at the LMF, embodiments according to the present disclosure are not limited thereto, and according to various embodiments, the method may include additional operations, or fewer operations, or the order of operations may vary, unless otherwise stated or implied, without departing from the spirit and scope of embodiments according to the present disclosure.

Referring to FIG. 6, at operation 605, the LMF determines/selects an AI/ML positioning model (e.g., a model identification) based on assistance data from a TRP and/or a UE. In response to different scenarios (e.g., an indoor environment or an outdoor environment), a proper, suitable AI/ML positioning model may be selected by the LMF based on the assistance data.

For example, the AI/ML positioning model may be determined by the following entities/scenarios:
(1) LMF only: the selection of the AI/ML positioning model is determined based on the configuration/implementation of an entity that request positioning (e.g., a UE, a gNB, or a location server).
(2) LMF with assistance data from a TRP and/or a UE: the LMF may determine, at operation 610, whether the LMF needs the assistance data for the model selection. If the LMF needs the assistance data for the model selection, the LMF may send, at operation 615, a request through LPP to the TRP and/or the UE for measurements for selecting an AI/ML positioning model, in which the request may be included in an information element, e.g., IE *RequestLocationinformation.* On the other hand, if the LMF does not need the assistance data for the model selection, the LMF may determine/select an AI/ML positioning model itself. In response to receiving the request from the LMF, the TRP and/or the UE may transmit/send, at operation 620, a measurement report associated with the selection of the AI/ML positioning model in an information element, e.g., IE *ProvideLocationinformation,* through LPP to the LMF. The detailed contents of the IEs (e.g., *RequestLocationInformation* and *ProvideLocationInformation*) for requesting assistance data for selecting an AI/ML positioning model are shown in Table 1.

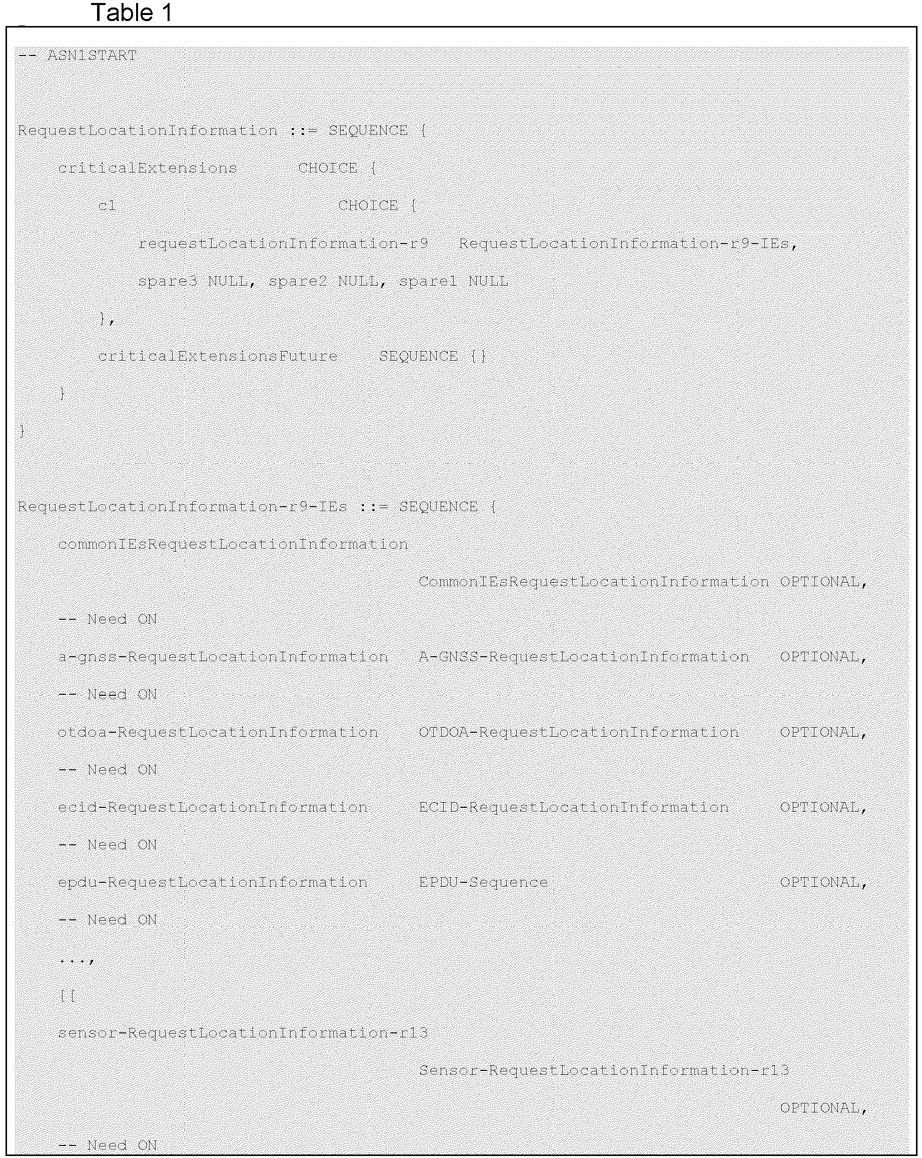

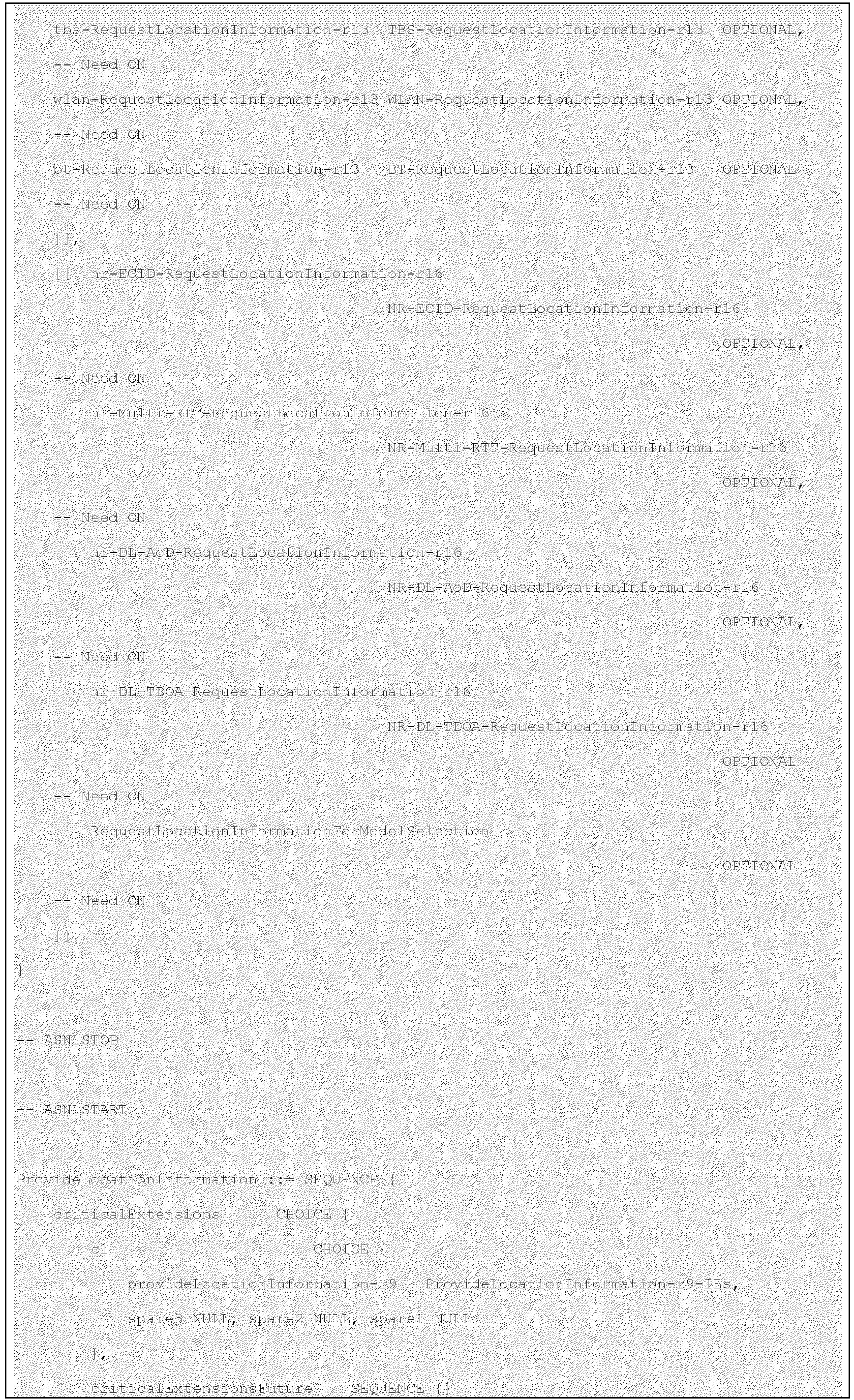

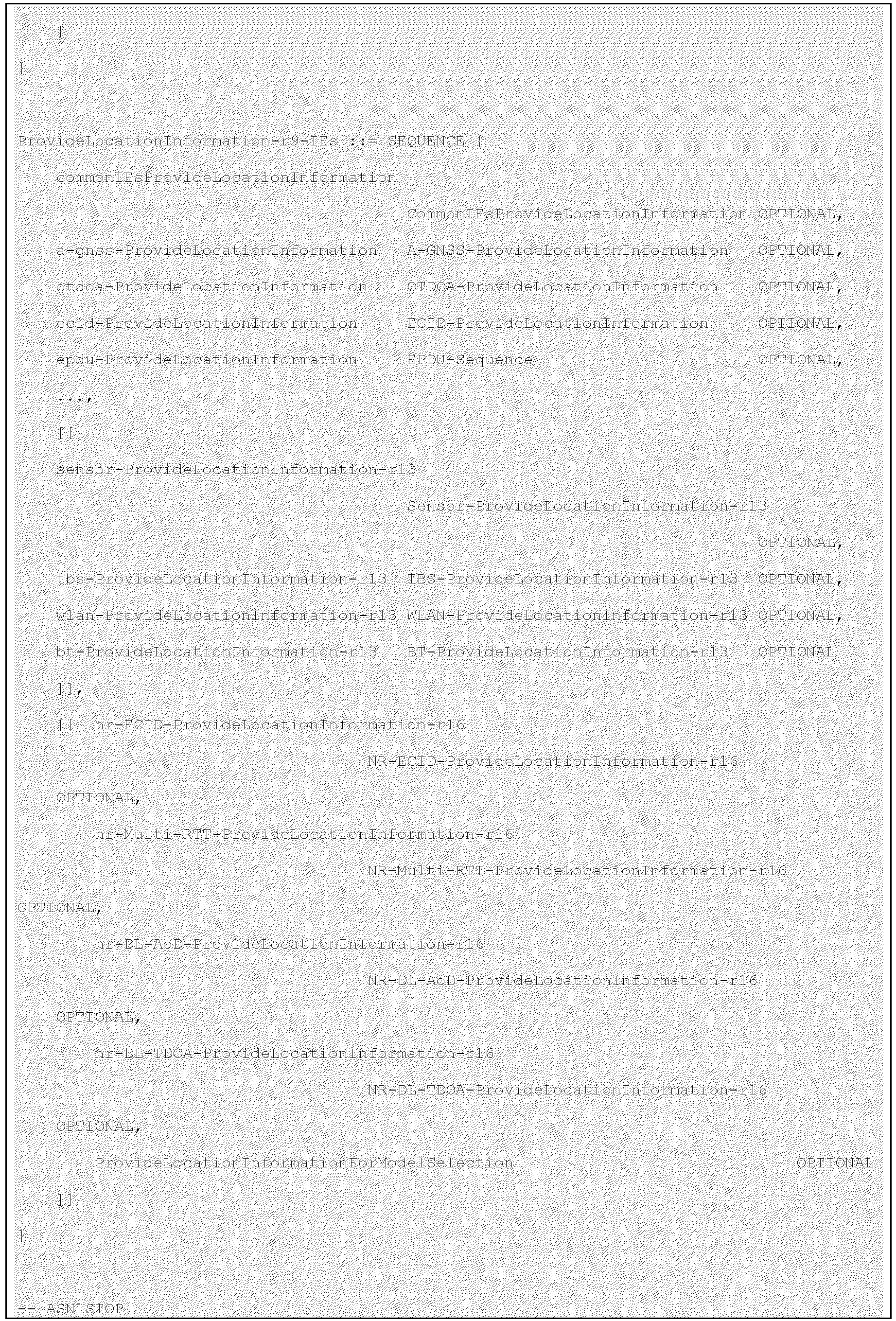

In some embodiments, the model identification may be performed at the UE-side model. For the UE-side model, the model identification may be based on a functionality identification with network-side additional conditions or a model ID-based identification for selecting an AI/ML model for positioning.

For example, the AI/ML positioning model may be determined by the following entities/scenarios according to one or more embodiments:
(1) UE only: the selection of the AI/ML positioning model may be determined based on the implementation of the UE.
(2) UE assisted by a TRP and/or the LMF: the selection of the AI/ML positioning model may be determined based on a message including associated ID corresponding to network side additional conditions sent from the TRP and/or the LMF. In addition, the TRP and/or the LMF may also send assistance data to the UE, including the measurement report to the UE through LPP.
(3) TRP or LMF with an indication to UE: the selection of the AI/ML positioning model may be determined based on a model ID corresponding to a specific model (or a set of models) sent from the TRP or LMP to UE through LPP.

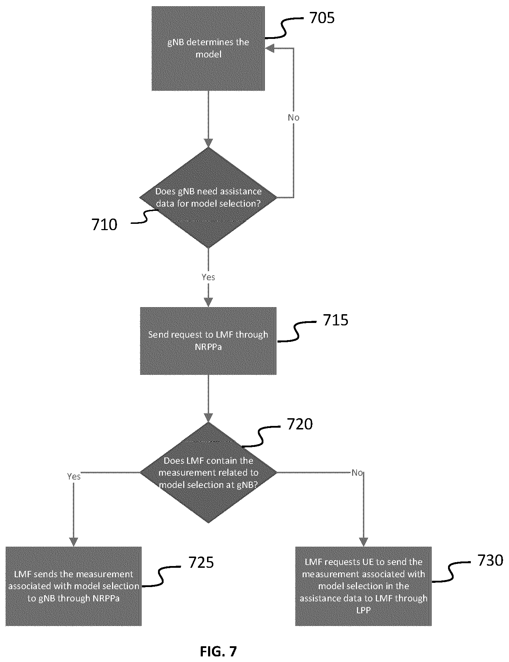

FIG. 7 is a flowchart depicting an example method for selecting an AI/ML positioning model performed at a base station, according to some embodiments of the present disclosure. Although FIG. 7 illustrates various operations in a method for selecting an AI/ML positioning model performed at the base station, embodiments according to the present disclosure are not limited thereto, and according to various embodiments, the method may include additional operations, or fewer operations, or the order of operations may vary, unless otherwise stated or implied, without departing from the spirit and scope of embodiments according to the present disclosure.

Referring to FIG. 7, at operation 705, a gNB determines/selects an AI/ML positioning model (e.g., a model identification).

For example, the AI/ML positioning model may be determined by the following entities/scenarios according to one or more embodiments:
(1) gNB only: the selection of the AI/ML positioning model may be determined based on the implementation of the gNB.
(2) gNB with assistance data from a UE and/or the LMF: at operation 710, the gNB may determine whether assistance data is needed for the model selection. If the gNB determines that the assistance data is needed, the gNB may send, at operation 715, a request to a UE through LPP or to the LMF through NRPPa for related measurements for selecting an AI/ML positioning model. On the other hand, if the gNB determines that the assistance data is not needed, the gNB may determine/select an AI/ML positioning model itself. In response to the request being sent to the UE, the UE may then send the assistance data, including a measurement report associated with the selection of the AI/ML positioning mode to gNB through LPP. In response to the request being sent to the LMF, the LMF may determine, at operation 720, whether the measurements are associated with the model selection at the gNB. If the measurements are associated with the model selection at the gNB, the LMF may send, at operation 725, the measurement associated with the model selection (e.g., an associated ID corresponding to network-side additional conditions) to the gNB through NRPPa. On the other hand, If the measurements are not associated with the model selection at the gNB, the LMF may request, at operation 730, the UE to send the measurements associated with the model selection at the gNB to the LMF through LPP. The detailed contents of the IEs for requesting assistance data for selecting an AI/ML positioning model is shown in Table 2. For example, an IE for the OTDOA positioning method (e.g., *OTDOA INFORMATION RESPONSE IE*) is shown in Table 2.

**Table 2**

| **IE/Group Name** | **Presence** | **Range** | **IE type and reference** | **Semantics Description** | **Criticality** | **Assigned Criticality** |
|---|---|---|---|---|---|---|
| Message Type | M | | | | YES | Reject |
| NRPPa Transaction ID | M | | | | - | |
| OTDOA Cells | | 1 .. *<maxCellinRANnode>* | | Served cells/TPs that broadcast PRS. May be used to signal multiple PRS configurations per cell/TPs (up to 3 are supported in this release) | YES | Ignore |
| OTDOA Cell Information | M | | | | - | |
| Criticality Diagnostics | O | | | | YES | Ignore |

(3) gNB indicated by LMF: the LMF may decide an AI/ML positioning model (or a set of models) and may send its corresponding model ID to the gNB through LPP.

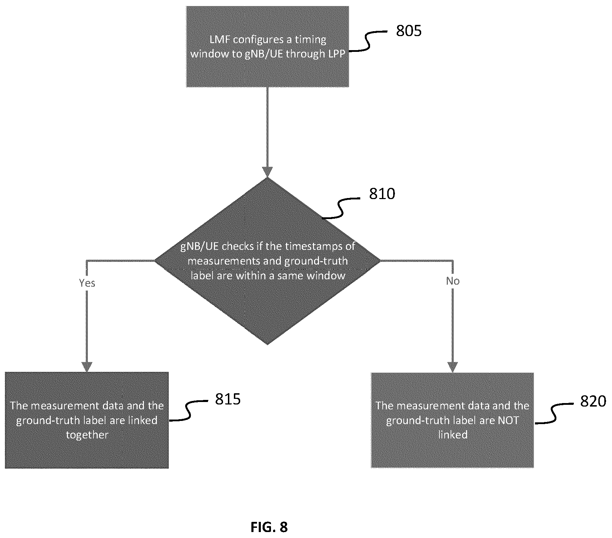

FIG. 8 is a flowchart depicting an example method for determining whether measurement data and ground-truth label are linked, according to some embodiments of the present disclosure. Although FIG. 8 illustrates various operations in a method for determining whether measurement data and ground-truth label are linked, embodiments according to the present disclosure are not limited thereto, and according to various embodiments, the method may include additional operations, or fewer operations, or the order of operations may vary, unless otherwise stated or implied, without departing from the spirit and scope of embodiments according to the present disclosure.

In collecting training data, the training data may include measurements (e.g., unlabeled data) and ground-truth labels which may be available at a training data entity. Entities for generating the ground-truth label may include a PRU, a UE, a gNB, and/or the LMF.

In Case 1 and Case 2a, the ground-truth labels may be sent from a PRU and/or a UE to the UE-side training entity (e.g. an Over-The-Top (OTT) server) through SLPP, cellular V2X (PC5) communication, and/or LPP. For example, for DL-TDOA, the ground-truth labels may be included in an information element, e.g., IE *DL-TDOA-ProvideAssistanceData.*

In Case 2b and Case 3b, the ground-truth labels may be sent from a PRU and/or a UE to the LMF through SLPP, cellular V2X (PC5) communication, and/or LPP. For example, for DL-TDOA, the ground-truth labels may be included in an information element, e.g., IE *DL-TDOA-LocationInformation.*

In Case 3a (e.g., a network node (e.g., a NG-RAN node) assisted positioning with the gNB-side model), the ground-truth labels may be sent from the LMF and/or other TRP (e.g., a second gNB) to the gNB-side training entity through NRPPa. For example, for UL-TDOA, the ground-truth labels may be included in *Assistance Information* IE, which may be included in the ASSISTANCE INFORMATION CONTROL message.

In some embodiments, the unlabeled measurement data and the ground-truth labels may be from different entities. For example, the measurements may be from the UE, and the corresponding ground-truth labels may be from the LMF. However, in this case, an association rule for the unlabeled measurement data and the ground-truth labels may be applied to link the unlabeled measurement data with the ground-truth labels. In response to linking unlabeled measurement data with the ground-truth labels, including a timestamp and a UE ID in a message including measurement report and the ground-truth labels. For the UE-side model and the gNB-side model, the UE or the gNB may be configured, at operation 805, by the LMF through LPP to have a timing window for positioning, such that the gNB may determine, at operation 810, whether the message including measurements, the message including the ground-truth labels with the same UE ID, and the associated timestamps are within the same configured timing window. If the timestamps of measurements and the ground-truth labels are within the same window, the unlabeled measurement data and the ground-truth labels from different entities are linked, at operation 815, and may be utilized as training data for the same UE. On the other hand, if the timestamps of measurements and the ground-truth labels are not within the same window, the unlabeled measurement data and the ground-truth labels from different entities are not linked, at operation 820.

If (e.g., when) training is performed at the AI/ML positioning model, there may be some correlation between the measurement and the ground truth labels for model training, and the measurements may be utilized as the input for model inference. Area information or scenario information may be associated with the training data including the measurements and the ground-truth labels, which may include one or more of the following: (1) an area ID or a scenario ID to identify an area or a scenario for the training data, (2) a PRS configuration for generating the training data, and/or (3) assistance data for generating the training data.

If (e.g., when) the training data is provided to the AI/ML positioning model from one entity, association information (e.g., correlation information) for the training data may also be provided from the same entity. For example, in Case 1 and Case 2a, the LMF may provide the training data and its association information to the UE in an information element, e.g., IE *ProvideAssistanceData,* through LPP, as shown in Table 3.

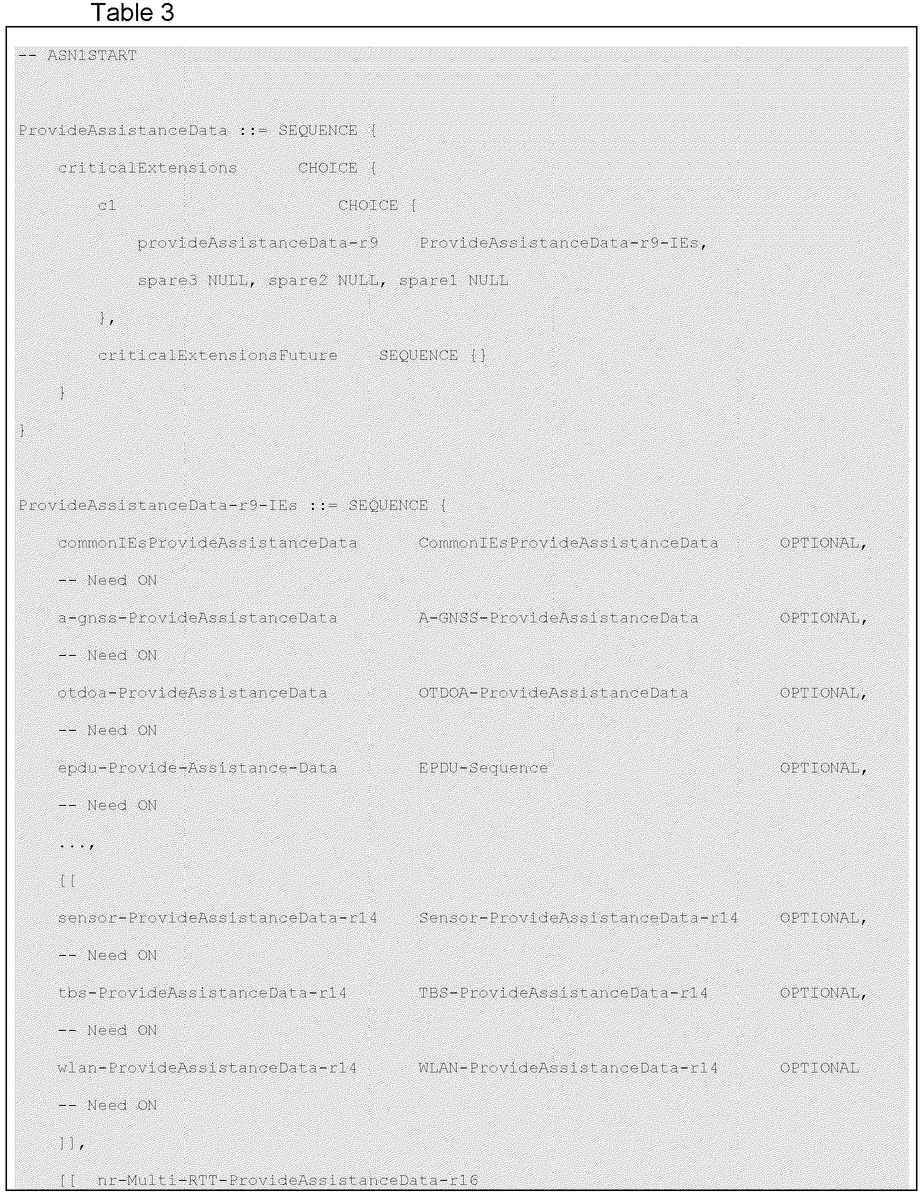

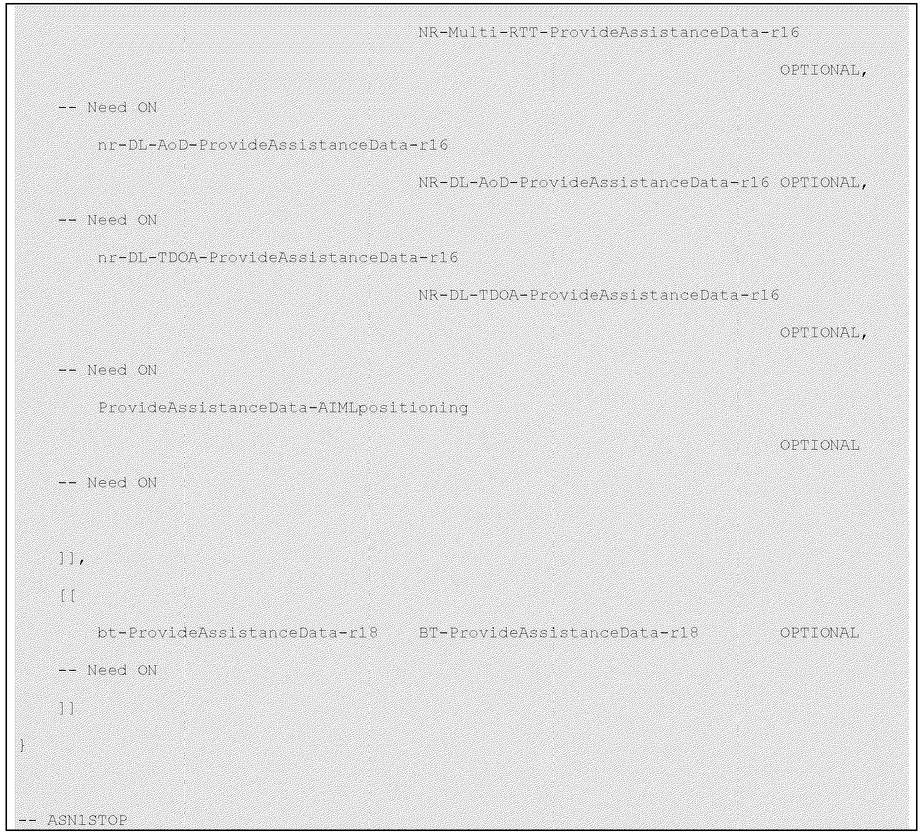

In performing the model inference, for the AI/ML direct positioning, the AI/ML positioning model may output an estimated coordinate of a location of the UE. For the AI/ML assisted positioning, the AI/ML positioning model may output intermediate measurement results. For example, the intermediate measurement results may include a timestamp and measurement quality information included in the measurement report for assisting positioning. In some embodiments, for the gNB-side model, the UE may be configured to report the measurements for timing and power information of a channel response (e.g., CIR, PDP, and/or power density (PD) measurements) and timestamps/quality information associated with the measurements to gNB through LPP and/or RRC. For the LMF-side model, the UE may be configured to report the measurements for timing and power information of the channel response (e.g., CIR, PDP, and/or PD measurements) and timestamps/quality information associated with the measurements to the LMF through LPP.

In some embodiments, the UE may be configured to report timestamps and/or quality information associated with CIR and PDP measurements and other measurements including RDTD, RTT, RSRP, and/or RSRPP in the measurement report to the LMF for the AI/ML assisted positioning. The CIR and PDP measurements may be included in an information element, e.g., IE *SignalMeasurementInformation* in IE *Location Information Elements,* and sent through LPP from the UE to the LMF.

For both the AI/ML direct positioning and the AI/ML assisted positioning, reference signal for the model inference may include PRS and/or another RS such as CSI-RS. In this case, a new IE for the configurations of DL-PRS and/or CSI-RS for the AI/ML direct positioning and the AI/ML assisted positioning may be needed in the assistance data sent from the LMF to UE through LPP. In response to a need of the new IE, the UE may be configured by the LMF to use DL-PRS and/or CSI-RS for positioning measurement.

For UE-assisted positioning, the UE may be configured to report the measurements for timing and power information of the channel response (e.g., CIR, PDP, and/or DP measurements) to the LMF.

If (e.g., when) the UE measures CIR and PDP, the UE may be first configured by the LMF with the total number of paths included in the measurement. The measurement of reference signal channel impulse response (PRS-CIR) with N paths in total may be defined as the channel response (e.g., magnitude of time response) at the i-th path delay of the resource elements that carry PRS signal configured for the measurement, where i=1, 2, 3, ... N, where N is configured by higher layer.

The PRS-PDP measurement with N paths in total may be defined as the power of the channel response at the i-th path delay of the resource elements that carry PRS signal configured for the measurement, where i=1, 2, 3, ... N, where N is configured by higher layer.

Furthermore, the CIR and/or PDP measurements may be either defined in standards or based on an implementation/configuration of the UE. In either case, the LMF may need to configure the total number of paths for the CIR and/or PDP measurements. The configuration of total number of paths may be through LPP in an information element, e.g., IE *ProvideAssistanceData,* for AI/ML positioning method (e.g., the AI/ML direct positioning and the AI/ML assisted positioning). The contents of IE *ProvideAssistanceData* are provided in Table 3 above.

In a sample-based measurement, the measurement may include Nt' samples of the estimated channel response in time domain. The timing information for the Nt' samples may be reported with a timing granularity T, where T=2^{k}×Tc, k represents the timing reporting granularity factor, and Tc is a basic time unit in NR.

The corresponding measurement (e.g., power if reported) corresponds to the measurement for the reported Nt' samples. In some embodiments, Nt' and k may be signaled/transmitted to an entity in the network. In some embodiments, the value range of Nt' may correspond to a value range of integer k for the timing granularity T. In some embodiments, the timing information may be defined relative to a reference time.

Based on the above definition of the sample-based measurement according to some embodiments, there may be some rules for the UE to generate the Nt' samples. The rules for the UE may be as follows: (1) the measurement samples are first ranked decreasingly according to the power of each sample, and (2) the Nt' samples are selected as the samples with first Nt'-th strongest power.

For example, the measurement samples may be first ranked increasingly according to the arrival time of each sample, and then the Nt' samples may be selected as the samples with first Nt'-th arrival time.

The UE may be configured by the LMF with an information element, e.g., IE *ProvideLocationInformation* shown in Table 3 above, through LPP, in which the rule is applied for generating samples for the sample-based measurement.

In performing the model monitoring, the model monitoring may include two entities, in which one entity derives the monitoring metric, and the other entity makes the monitoring decision. If the entity that derives the monitoring metric is different from the entity that makes the monitoring decision, signaling of the monitoring metric from the entity that derives the monitoring metric to the other entity that makes the monitoring decision may be used.

For performing the model monitoring in Case 1 (e.g., the UE-based positioning with the UE-side model in the AI/ML direct positioning), the training may be terminated at the UE-side OTT server, which may imply that ground-truth labels and the measurements are available at the OTT server. The model monitoring may therefore be carried out by an implementation at the OTT server, or the ground-truth labels and the measurements may be transferred to the UE to calculate the monitoring metric.

For Case 1, during the model monitoring, the UE may be configured to report an indicator to the LMF indicating if a model for the AI/ML direct positioning has changed in response to a change in the model quality to improve the accuracy and quality of outputs (e.g., positioning results). For example, the model quality may be determined by the model input/output probability distribution. For Case 1, the UE may be configured by the LMF through LPP a threshold for the variance of the input and/or output probability distribution. If (e.g., when) the variance of the input and/or output probability distribution is above the configured threshold, it triggers the UE to change the current model.

For performing the model monitoring for Case 2a (e.g., the UE-assisted/LMF-based positioning with the UE-side model in the AI/ML assisted positioning) and Case 3a, the monitoring entity in Case 2a may include the UE, the gNB, and/or the LMF. The monitoring method for Case 2a may include as follows according to one or more embodiments:
(1) The UE may calculate the metric and makes the monitoring decision. If the UE decides to do model switching, the UE may need to train its model again. Then the UE may send request to the LMF through LPP in an information element, e.g., IE *RequestAssistanceData,* to request a new set of training data. The detailed contents of IE *RequestAssistanceData* for the AI/ML assisted positioning are shown in Table 4.

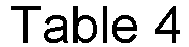

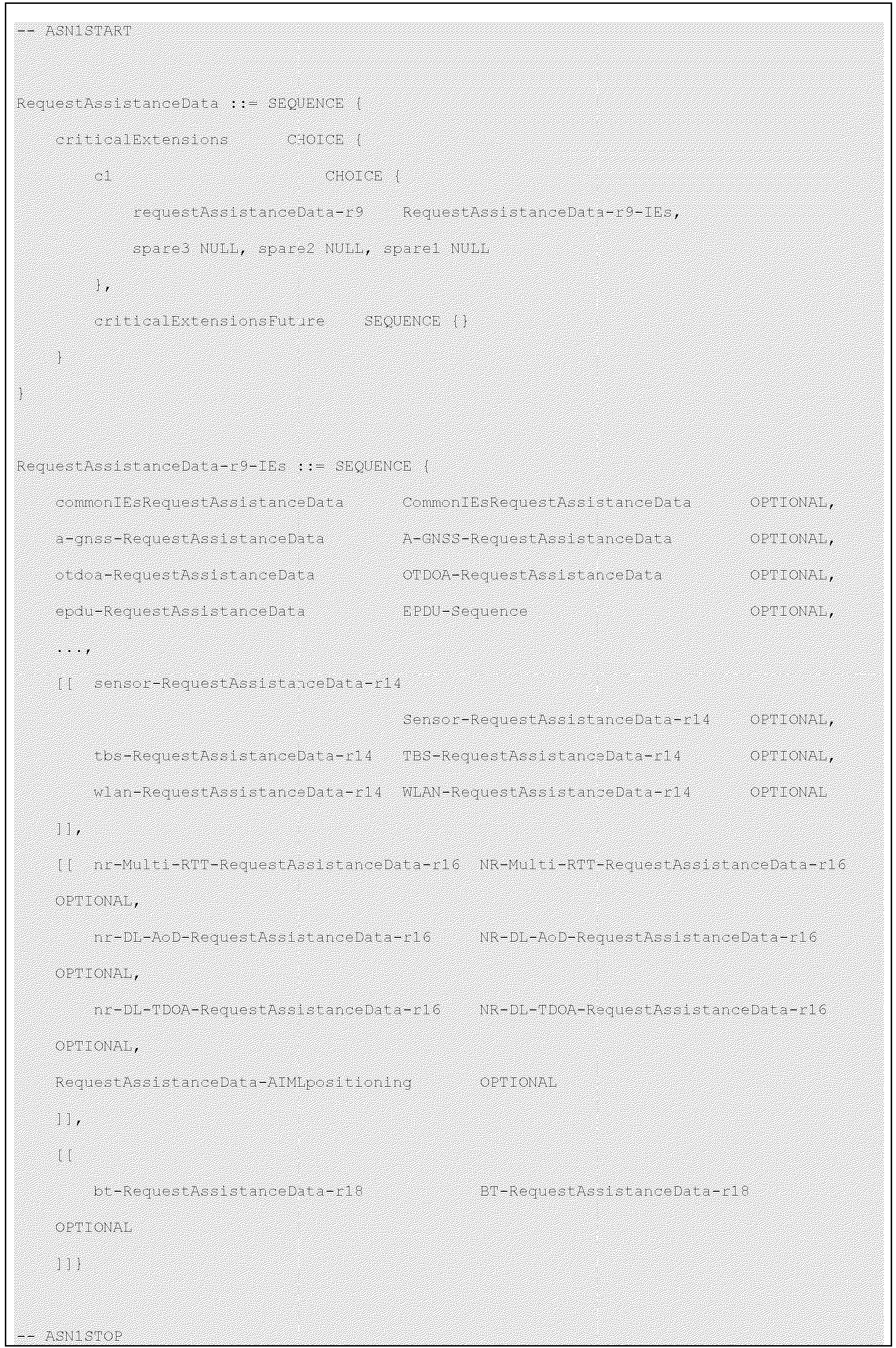

In some embodiments, the association information sent together with the request for the training data to the LMF may include: (1) an indication to inform that the current model is changed, (2) an area ID or a scenario ID for identifying the validity of the training data, and (3) the legacy positioning methods utilized for generating the ground-truth labels. In some embodiments, the LMF and/or a gNB may make the monitoring decision.

For performing the model monitoring in Case 2a, if the LMF and/or the gNB performs the model monitoring, the LMF and/or the gNB will indicate assistance information including threshold criterion and/or network conditions for model switching to UE for calculating the monitoring metric or to facilitate the calculation of the monitoring metric and/or the monitoring decision at the UE. In some embodiments, the UE may be configured to indicate the LMF if the AI/ML positioning model for positioning has changed.

For performing the model monitoring in Case 3a (e.g., the NG-RAN node-assisted positioning with the gNB-side model in the AI/ML assisted positioning), the entity deriving the monitoring metric may include the gNB and the LMF. If the gNB calculates the metric and makes the monitoring decision itself, the calculations and the monitoring decision may be determined based on an implementation of the gNB. If the model monitoring is performed by the LMF, the LMF will send assistance information including threshold criterion for model switching, and/or a model ID to the gNB. In some embodiments, the gNB may be configured to indicate the LMF if the AI/ML positioning model for positioning has changed.

For the UE-side model, the UE may perform the model monitoring based on the different conditions including doppler shift, received SNR, and/or UE speed. The UE reports to the LMF the capability to indicate if the UE may perform monitoring to more than one model. The UE may be configured with reference signal including PRS, CSI-RS, and/or other reference signals for model monitoring.

For performing the model monitoring in Case 2b (e.g., the UE-assisted/LMF-based positioning with the LMF-side model in the AI/ML direct positioning) and Case 3b (e.g., the NG-RAN node-assisted positioning with the LMF-side model in the AI/ML direct positioning), the entity deriving the monitoring metric may be the LMF. The LMF may collect measurements and have access to the ground-truth labels. Therefore, for the model monitoring in Case 2b and Case 3B, the UE and/or the gNB may only provide a measurement report through LPP and NRPPa.

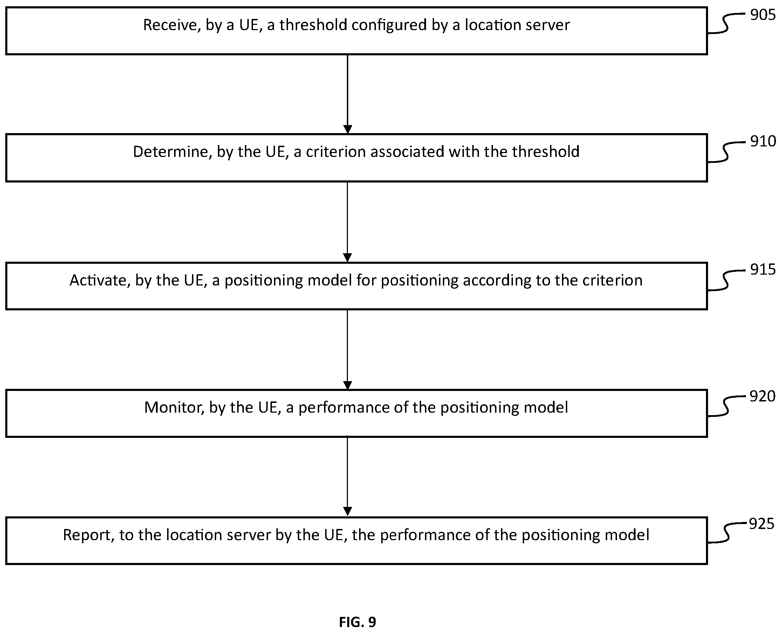

FIG. 9 is a flowchart depicting a method for positioning performed at a UE, according to some embodiments of the present disclosure. Although FIG. 9 illustrates various operations in a method for positioning performed at the UE, one or more embodiments according to the present disclosure are not limited thereto, and according to one or more embodiments, the method may include additional operations or fewer operations, or the order of operations may vary, unless otherwise stated or implied, without departing from the spirit and scope of embodiments according to the present disclosure.

Referring to FIG. 9, at operation 905, a UE receives a threshold configured by a location server (e.g., the LMF).

An operation 910, the UE determines a criterion associated with the threshold. In some embodiments, the determining of the criterion may further include determining that a probability of LOS is lower than or equal to the threshold.

At operation 915, the UE activates a positioning model for positioning according to the criterion.

At operation 920, the UE monitors a performance of the positioning model.

At operation 925, the UE reports, to the location server, the performance of the positioning model.

In some embodiments, the UE may further include receiving, from the location server, the positioning model selected by the location server.

In some embodiments, the UE may further send, to the location server, a report indicating a capability of supporting the positioning model, and receive, from the location server, a configuration for employing the positioning model.

In some embodiments, the UE may further determine that the probability of LOS is greater than the threshold, select a second positioning model for positioning, and send, to the location server, an indicator indicating whether the positioning model is feasible and/or whether there is a change in the positioning model.

In some embodiments, the positioning model may be trained at the UE or an OTT server utilizing ground-truth labels, where the ground-truth labels may be sent from at least one selected from among a PRU and the UE, through at least one selected from among SLPP, cellular V2X (PC5) communication, and LPP.

In some embodiments, the performance may include a measurement including timing and power information associated with a channel response and a time stamp and quality information associated with the measurement.

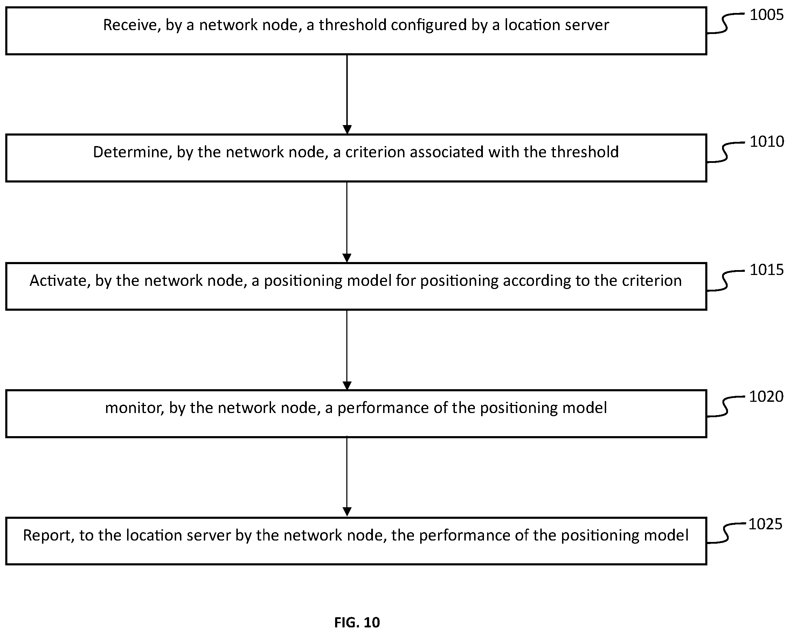

FIG. 10 is a flowchart depicting a method for positioning performed at a network node, according to some embodiments of the present disclosure. Although FIG. 10 illustrates various operations in a method for positioning performed at the network node, one or more embodiments according to the present disclosure are not limited thereto, and according to one or more embodiments, the method may include additional operations or fewer operations, or the order of operations may vary, unless otherwise stated or implied, without departing from the spirit and scope of embodiments according to the present disclosure.

Referring to FIG. 10, at operation 1005, a network node (e.g., a base station, such as a gNB) receives a threshold configured by a location server (e.g., the LMF).

An operation 1010, the network node determines a criterion associated with the threshold. In some embodiments, the determining of the criterion may include determining that a probability of LOS is lower than or equal to the threshold.

At operation 1015, the network node activates a positioning model for positioning according to the criterion.

At operation 1020, the network node activates a positioning model for positioning according to the criterion.

At operation 1025, the network node monitors a performance of the positioning model.

At operation 1030, the network node reports, to the location server, the performance of the positioning model.

In some embodiments, the network node may further select a second positioning model for positioning and send, to the location server, an indicator indicating whether the positioning model is feasible and/or whether there is a change in the positioning model.

In some embodiments, the performance may include a measurement including timing and power information associated with a channel response and a time stamp and quality information associated with the measurement.

In some embodiments, the network node may further receive a NLOS indicator with a measurement associated with at least one selected from among reference signal time difference (RSTD), Rx-Tx time difference, reference signal received power (RSRP), reference signal received path power (RSRPP), Angle of Arrival (AoA), Relative Time of Arrival (RTOA), reference signal carrier phase (RSCP), and reference signal carrier phase difference (RSCPD).

In some embodiments, the network node may further send, to a UE, a request for data associated with a selection of the positioning model through LPP, and receive, from the UE, a measurement associated with the selection of the positioning model through LPP.

In some embodiments, the network node may further send, to the location server, a request for data associated with a selection of the positioning model through NRPPa, and receive, from the location server, an identifier (ID) corresponding to the data associated with the selection of the positioning model through NRPPa.

In some embodiments, positioning model may be trained at a training entity at the network node (e.g., a gNB-side training entity) utilizing ground-truth labels, where the ground-truth labels may be sent from at least one selected from among a second network node and the location server, through NRPPa.

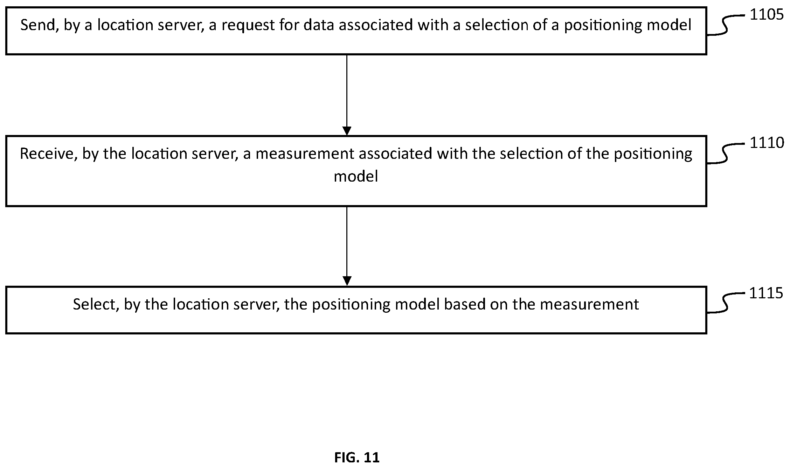

FIG. 11 is a flowchart depicting a method for positioning performed at a location server, according to some embodiments of the present disclosure. Although FIG. 11 illustrates various operations in a method for positioning performed at the location server, one or more embodiments according to the present disclosure are not limited thereto, and according to one or more embodiments, the method may include additional operations or fewer operations, or the order of operations may vary, unless otherwise stated or implied, without departing from the spirit and scope of embodiments according to the present disclosure.

Referring to FIG. 11, at operation 1105, a location server (e.g., the LMF) sends a request for data associated with a selection of a positioning model. In some embodiments, the request may be included in an information element, e.g., IE *RequestLocationinformation,* utilizing LPP. For example, the location server may send the request to a UE or a network node for data associated with the selection of a positioning model.

At operation 1110, the location server receives a measurement associated with the selection of the positioning model. In some embodiments, the measurement may be received from a UE through LPP. In some embodiments, the measurement may be received from a network node (e.g., a gNB) through NRPPa.

At operation 1115, the location server selects the positioning model based on the measurement.

In some embodiments, the positioning model may be trained at the location server utilizing ground-truth labels, where the ground-truth labels may be sent from at least one selected from among a PRU and a UE, through at least one selected from among SLPP, cellular V2X (PC5) communication, and LPP.

In some embodiments, the location server may further receive, from a UE, a report indicating a capability of supporting the positioning model, and send, to the UE, a configuration for employing the positioning model through an information element, e.g., IE *RequestLocationInformation.*

In some embodiments, the measurement may include timing and power information associated with a channel response and a time stamp and quality information associated with the measurement.

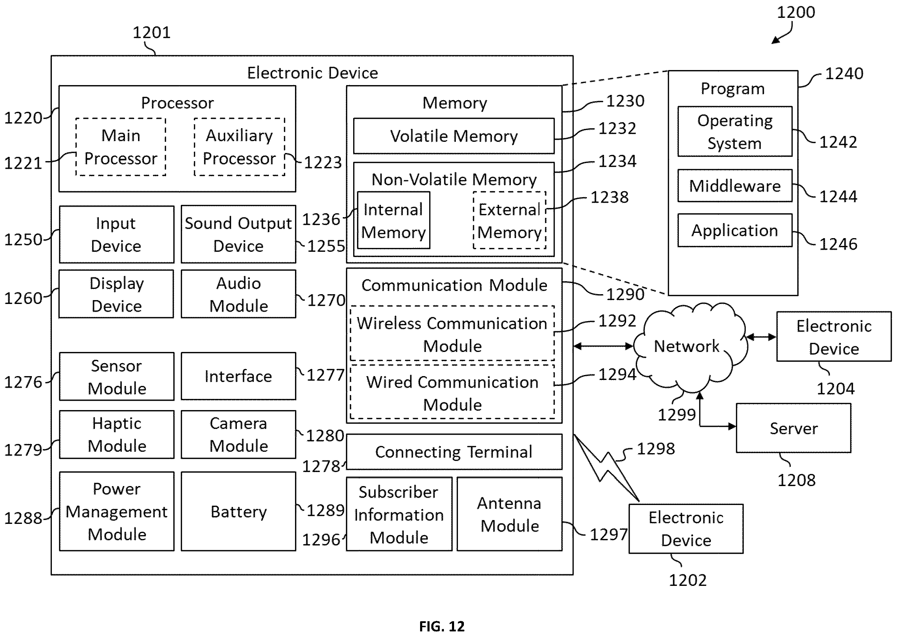

FIG. 12 is a block diagram of an electronic device in a network environment, according to some embodiments of the present disclosure.

Referring to FIG. 12, an electronic device 1201 in a network environment 1200 may communicate with an electronic device 1202 via a first network 1298 (e.g., a short-range wireless communication network), or with an electronic device 1204 or a server 1208 via a second network 1299 (e.g., a long-range wireless communication network). The electronic device 1201 may communicate with the electronic device 1204 via the server 1208. The electronic device 1201 may include a processor 1220, a memory 1230, an input device 1250, a sound output device 1255, a display device 1260, an audio module 1270, a sensor module 1276, an interface 1277, a haptic module 1279, a camera module 1280, a power management module 1288, a battery 1289, a communication module 1290, a subscriber identification module (SIM) card 1296, and/or an antenna module 1297. In one embodiment, at least one of the components (e.g., the display device 1260 or the camera module 1280) may be omitted from the electronic device 1201, or one or more other components may be added to the electronic device 1201. Some of the components may be implemented as a single integrated circuit (IC). For example, the sensor module 1276 (e.g., a fingerprint sensor, an iris sensor, or an illuminance sensor) may be embedded in the display device 1260 (e.g., a display).

The processor 1220 may execute software (e.g., a program 1240) to control at least one other component (e.g., a hardware or a software component) of the electronic device 1201 coupled to the processor 1220, and may perform various data processing or computations.

As at least part of the data processing or computations, the processor 1220 may load a command or data received from another component (e.g., the sensor module 1276 or the communication module 1290) in volatile memory 1232, may process the command or the data stored in the volatile memory 1232, and may store resulting data in non-volatile memory 1234. The processor 1220 may include a main processor 1221 (e.g., a central processing unit or an application processor (AP)), and an auxiliary processor 1223 (e.g., a graphics processing unit (GPU), an image signal processor (ISP), a sensor hub processor, or a communication processor (CP)) that is operable independently from, or in conjunction with, the main processor 1221. Additionally or alternatively, the auxiliary processor 1223 may be adapted to consume less power than the main processor 1221, or to execute a particular function. The auxiliary processor 1223 may be implemented as being separate from, or a part of, the main processor 1221.

The auxiliary processor 1223 may control at least some of the functions or states related to at least one component (e.g., the display device 1260, the sensor module 1276, or the communication module 1290), as opposed to the main processor 1221 while the main processor 1221 is in an inactive (e.g., sleep) state, or together with the main processor 1221 while the main processor 1221 is in an active state (e.g., executing an application). The auxiliary processor 1223 (e.g., an image signal processor or a communication processor) may be implemented as part of another component (e.g., the camera module 1280 or the communication module 1290) functionally related to the auxiliary processor 1223.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input device 1250 may receive a command or data to be used by another component (e.g., the processor 1220) of the electronic device 1201, from the outside (e.g., a user) of the electronic device 1201. The input device 1250 may include, for example, a microphone, a mouse, or a keyboard.

The sound output device 1255 may output sound signals to the outside of the electronic device 1201. The sound output device 1255 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 1260 may visually provide information to the outside (e.g., to a user) of the electronic device 1201. The display device 1260 may include, for example, a display, a hologram device, or a projector, and may include control circuitry to control a corresponding one of the display, hologram device, and projector. The display device 1260 may include touch circuitry adapted to detect a touch, or may include sensor circuitry (e.g., a pressure sensor) adapted to measure the intensity of force incurred by the touch.

The audio module 1270 may convert a sound into an electrical signal and vice versa. The audio module 1270 may obtain the sound via the input device 1250 or may output the sound via the sound output device 1255 or a headphone of an external electronic device 1202 directly (e.g., wired) or wirelessly coupled to the electronic device 1201.

The sensor module 1276 may detect an operational state (e.g., power or temperature) of the electronic device 1201, or an environmental state (e.g., a state of a user) external to the electronic device 1201. The sensor module 1276 may then generate an electrical signal or data value corresponding to the detected state. The sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 1277 may support one or more specified protocols to be used for the electronic device 1201 to be coupled to the external electronic device 1202 directly (e.g., wired) or wirelessly. The interface 1277 may include, for example, a high-definition multimedia interface (HDMI), a universal serial bus (USB) interface, a secure digital (SD) card interface, or an audio interface.

A connecting terminal 1278 may include a connector via which the electronic device 1201 may be physically connected to the external electronic device 1202. The connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or a movement) or an electrical stimulus, which may be recognized by a user via tactile sensation or kinesthetic sensation. The haptic module 1279 may include, for example, a motor, a piezoelectric element, or an electrical stimulator.

The camera module 1280 may capture a still image or moving images. The camera module 1280 may include one or more lenses, image sensors, image signal processors, or flashes. The power management module 1288 may manage power that is supplied to the electronic device 1201. The power management module 1288 may be implemented as at least part of, for example, a power management integrated circuit (PMIC).

The battery 1289 may supply power to at least one component of the electronic device 1201. The battery 1289 may include, for example, a primary cell that is not rechargeable, a secondary cell that is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208), and may support performing communication via the established communication channel. The communication module 1290 may include one or more communication processors that are operable independently from the processor 1220 (e.g., the AP), and may support a direct (e.g., wired) communication or a wireless communication. The communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as BLUETOOTHTM, wireless-fidelity (Wi-Fi) direct, or a standard of the Infrared Data Association (IrDA)), or via the second network 1299 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1292 may identify and authenticate the electronic device 1201 in a communication network, such as the first network 1298 or the second network 1299, utilizing subscriber information (e.g., international mobile subscriber identity (IMSI)) stored in the subscriber identification module 1296.

The antenna module 1297 may transmit or receive a signal or power to or from the outside (e.g., the external electronic device) of the electronic device 1201. The antenna module 1297 may include one or more antennas. The communication module 1290 (e.g., the wireless communication module 1292) may select at least one of the one or more antennas appropriate for a communication scheme used in the communication network, such as the first network 1298 or the second network 1299. The signal or the power may then be transmitted or received between the communication module 1290 and the external electronic device via the selected at least one antenna.

Commands or data may be transmitted or received between the electronic device 1201 and the external electronic device 1204 via the server 1208 coupled to the second network 1299. Each of the electronic devices 1202 and 1204 may be a device of a same type as, or a different type, from the electronic device 1201. All or some of operations to be executed at the electronic device 1201 may be executed at one or more of the external electronic devices 1202 or 1204, or server 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1201. The electronic device 1201 may provide the outcome, with or without further processing of the outcome, as at least part of a reply to the request. To that end, cloud computing, distributed computing, or client-server computing technology may be utilized, for example.

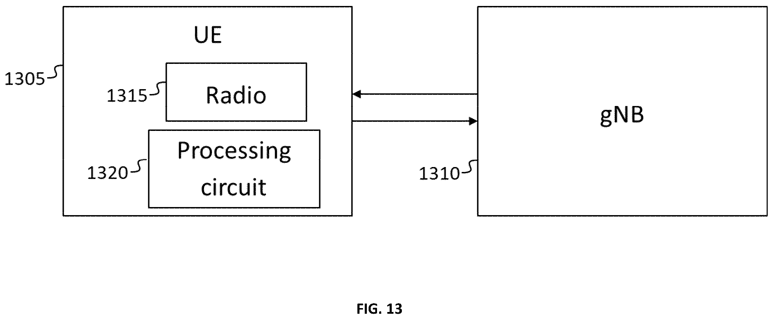

FIG. 13 shows a system including a UE 1305 and a gNB 1310, in communication with each other. The UE may include a radio 1315 and a processing circuit (or a means for processing) 1320, which may perform various methods disclosed herein, e.g., the method illustrated in FIG. 9. For example, the processing circuit 1320 may receive, via the radio 1315, transmissions from the gNB 1310, and the processing circuit 1320 may transmit, via the radio 1315, signals to the gNB 1310. The gNB 1310 may perform various methods disclosed herein, e.g., the method illustrated in FIG. 10.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims, with functional equivalents thereof to be included therein.

## Claims

1. A method comprising:
receiving (905), by a user equipment, UE, (108, 116, 208, 218) a threshold configured by a location server (118, 210, 220);
determining (910), by the UE (108, 116, 208, 218), a criterion associated with the threshold;
activating (915), by the UE (108, 116, 208, 218) a positioning model for positioning according to the criterion;
monitoring (920), by the UE (108, 116, 208, 218), a performance of the positioning model; and
reporting (925), to the location server (118, 210, 220) by the UE (108, 116, 208, 218), the performance of the positioning model.

2. The method of claim 1, wherein the determining (910) of the criterion further comprises:
determining, by the UE (108, 116, 208, 218), that a probability of line of sight, LOS, is lower than or equal to the threshold.

3. The method of claim 1 or 2, further comprising:
receiving, from the location server (118, 210, 220) by the UE (108, 116, 208, 218), the positioning model selected by the location server (118, 210, 220).

4. The method of any one of claims 1 to 3, further comprising:
sending, to the location server (118, 210, 220) by the UE (108, 116, 208, 218), a report indicating a capability of supporting the positioning model; and
receiving, from the location server (118, 210, 220) by the UE (108, 116, 208, 218), a configuration for employing the positioning model.

5. The method of claim 1, further comprising:
determining, by the UE (108, 116, 208, 218), that a probability of line of sight, LOS, is greater than the threshold;
selecting, by the UE (108, 116, 208, 218), a second positioning model for positioning; and
sending, to the location server (118, 210, 220) by the UE (108, 116, 208, 218), an indicator indicating whether the positioning model is feasible and/or whether there is a change in the positioning model.

6. The method of any one of claims 1 to 5, wherein the performance comprises a measurement comprising timing and power information associated with a channel response and a time stamp and quality information associated with the measurement.

7. A method comprising:
receiving (1005), by a network node (110, 202, 212), a threshold configured by a location server (118, 210, 220);
determining (1010), by the network node (110, 202, 212), a criterion associated with the threshold;
activating (1015), by the network node (110, 202, 212), a positioning model for positioning according to the criterion;
monitoring (1020), by the network node (110, 202, 212), a performance of the positioning model; and
reporting (1025), to the location server (118, 210, 220) by the network node (110, 202, 212), the performance of the positioning model.

8. The method of claim 7, wherein the determining (1010) of the criterion further comprises:
determining, by the network node (110, 202, 212), that a probability of line of sight, LOS, is lower than or equal to the threshold.

9. The method of claim 7 or 8, further comprising:
selecting, by the network node (110, 202, 212), a second positioning model for positioning; and
sending, to the location server (118, 210, 220) by the network node (110, 202, 212), an indicator indicating whether the positioning model is feasible and/or whether there is a change in the positioning model.

10. The method of any one of claims 7 to 9, wherein the performance comprises a measurement comprising timing and power information associated with a channel response, a time stamp and quality information associated with the measurement.

11. The method of any one of claims 7 to 10, further comprising:
receiving, by the network node (110, 202, 212), a non-line-of-sight, NLOS, indicator with a measurement associated with at least one selected from among reference signal time difference, RSTD, Rx-Tx time difference, reference signal received power, RSRP, reference signal received path power, RSRPP, Angle of Arrival, AoA, Relative Time of Arrival, RTOA, reference signal carrier phase, RSCP, and reference signal carrier phase difference, RSCPD.

12. The method of any one of claims 7 to 11, further comprising:
sending, to the location server (118, 210, 220) by the network node (110, 202, 212), a request for data associated with a selection of the positioning model through New Radio Positioning Protocol A, NRPPa; and
receiving, from the location server (118, 210, 220) by the network node (110, 202, 212), an identifier, ID, corresponding to the data associated with the selection of the positioning model through NRPPa.

13. A method comprising:
sending (1105), by a location server (118, 210, 220), a request for data associated with a selection of a positioning model;
receiving (1110), by the location server (118, 210, 220), a measurement associated with the selection of the positioning model; and
selecting (1115), by the location server (118, 210, 220), the positioning model based on the measurement.

14. The method of claim 13, wherein the request is included in information element, IE, *RequestLocationinformation* utilizing LTE positioning protocol, LPP.

15. The method of claim 13 or 14, wherein the measurement is received from a network node (110, 202, 212) through New Radio Positioning Protocol A, NRPPa.
